(19) Europäisches Patentamt

European Patent Office

Office européen des brevets

(11) **EP 1 103 702 B1**

(12) **FASCICULE DE BREVET EUROPEEN**

(45) Date de publication et mention
de la délivrance du brevet:
**14.05.2003 Bulletin 2003/20**

(51) Int Cl.⁷: **F01N 9/00**, F01N 3/029,
F02D 41/14, F02D 41/38,
F02D 33/02

(21) Numéro de dépôt: **00403210.8**

(22) Date de dépôt: **17.11.2000**

(54) **Procédé de gestion du fonctionnement d'un filtre à particules et d'un moteur à combustion interne**

Regelungverfahren eines Partikelfilters und Regelungsverfahren einer Brennkraftmaschine

Process of controlling a particle filter and a process of controlling an internal combustion engine

(84) Etats contractants désignés:
**BE DE GB**

(30) Priorité: **26.11.1999 FR 9914889**
　　　　　　**26.11.1999 FR 9914890**

(43) Date de publication de la demande:
**30.05.2001 Bulletin 2001/22**

(73) Titulaire: **Renault s.a.s.**
**92100 Boulogne Billancourt (FR)**

(72) Inventeurs:
• **Archimbaud, Marie Laure**
**75010 Paris (FR)**

• **Hekimian, Georges**
**92300 Levallois (FR)**
• **Meurisse, Olivier**
**92160 Anthony (FR)**
• **Chaumeaux, Romuald**
**95510 Lardy (FR)**
• **Marcelly, Bruno**
**91400 Orsay (FR)**

(56) Documents cités:
DE-A- 19 618 691　　　　FR-A- 2 668 203
FR-A- 2 774 421　　　　　US-A- 5 138 835
US-A- 5 287 698　　　　　US-A- 5 941 743

**Description**

La présente invention concerne un procédé de gestion du fonctionnement d'un système d'échappement de moteur à combustion du type comportant un filtre à particules et des moyens pilotés d'aide à la régénération du filtre, et son procédé de commande d'un moteur à combustion, tel qu'un moteur diesel, équipé d'un filtre à particules.

Les normes concernant la pollution et la consommation des moteurs à combustion interne équipant notamment les véhicules automobiles ou routiers, se sévérisent chaque jour davantage dans l'ensemble des pays industrialisés. L'industrie automobile est donc aujourd'hui occupée à trouver des solutions techniques pour répondre à ces obligations et ce, sans trop pénaliser ni les performances des moteurs ni leur prix de revient.

Parmi les systèmes connus pour éliminer les particules émises par les moteurs à combustion interne et en particulier les moteurs diesels, on peut citer les filtres à particules insérés dans les lignes d'échappement des moteurs. Ces filtres sont adaptés pour piéger les particules ou suies contenues dans les gaz d'échappement. Des dispositifs de régénération pilotés permettent de brûler périodiquement les particules piégées dans les filtres et éviter le colmatage de ces derniers.

En effet, les particules de suie brûlent à des températures de l'ordre de 550 à 600°C. De tels niveaux thermiques ne sont que rarement atteints par les gaz d'échappement d'un moteur diesel automobile puisque par exemple en ville la température des gaz d'échappement évolue entre 150 et 250°. D'où la nécessité de disposer de moyens appropriés pour élever la température des gaz lorsque l'on souhaite régénérer un tel filtre à particules.

Différents systèmes ont été proposés. Des systèmes de chauffage par résistance électrique, notamment des grilles chauffantes, permettent de porter la température des gaz d'échappement à une valeur suffisante pour provoquer la combustion des particules dans le filtre.

D'autres systèmes proposent d'augmenter la température des gaz d'échappement par injection d'une quantité supplémentaire de carburant dans au moins une des chambres de combustion sous la forme d'une post-injection. C'est-à-dire, qu'après avoir injecté la quantité de carburant nécessaire au fonctionnement classique du moteur, une quantité supplémentaire de carburant est injectée dans un second temps. Une partie de cette quantité de carburant additionnelle s'enflamme en produisant une augmentation de la température des gaz d'échappement, le reste de cette quantité est transformé en produits d'oxydations partielles comme le monoxyde de carbone CO et les hydrocarbures HC.

Ce monoxyde et ces hydrocarbures peuvent également participer à l'augmentation des gaz d'échappement en réagissent par des réactions exothermiques avant leur arrivée dans le filtre à particules. Les réactions exothermiques sont obtenues lors de la traversée d'un catalyseur d'oxydation disposé en amont du filtre à particules.

Par ailleurs, pour minimiser la dépense énergétique nécessaire à la combustion des suies, il est également connu d'abaisser cette température de combustion des suies en utilisant des catalyseurs appropriés. Ainsi, il est connu d'ajouter dans le carburant un additif tel qu'un composé organo-métallique. Cet additif mélangé au carburant se retrouve dans les particules de suie ce qui lui permet de jouer un rôle catalytique lors de la combustion des particules de suie et d'abaisser les températures d'inflammation de ces dernières.

La mise en action de ces différents systèmes d'aide à la régénération est pilotée par un système électronique de commande qui détermine en fonction d'un certain nombre de paramètres et notamment le chargement du filtre à particules, l'instant de la régénération.

Ainsi le document, FR2774421 divulgue un tel système de gestion du fonctionnement d'un filtre à particules associé à un moteur diesel notamment de véhicule automobile, et décrit comment la mise en action des moyens d'aide à la régénération est déclenchée dès lors que la masse de suie dans le filtre est supérieure à une valeur de seuil, cette masse de suie étant déterminée à partir de la mesure de la perte de charge aux bornes du filtre à particules et des conditions de fonctionnement du moteur.

La connaissance de la masse de suie piégée est, en effet, une donnée essentielle pour la commande des moyens d'aide à la régénération. Lorsque le niveau des suies est trop faible, il est très difficile de les faire brûler et lorsque cette masse est trop importante, la combustion fortement exothermique des suies risquerait de détruire le filtre.

Or, il se trouve que les méthodes décrites dans l'art antérieur pour déterminer cette masse de suie, s'avèrent très approximatives, surtout au fur et à mesure du vieillissement du filtre. En effet, le chargement mesuré à partir de la perte de charge, n'est pas constitué exclusivement de particules de suie combustibles lors des phases de régénération. Le moteur produit, effectivement, des particules non combustibles aux températures de combustion des suies, particules qui sont piégées par le filtre et qui ne peuvent pas être vaporisées lors des phases de régénération.

Ces particules "non combustibles" (aux températures de combustions des suies) à la longue colmatent le filtre et réduisent d'autant les capacités de stockage en suies de ce dernier. Parmi les particules "non combustibles" qui demeurent donc sur le filtre, on peut citer les additifs d'aide à la régénération constitués par des composés organo-métalliques, lesquels ont des températures de sublimation très élevées et ne brûlent donc pas lors des phases de régénération classique du filtre où la température n'excède que rarement les 1000°C. De même, certains additifs non combustibles de l'huile peuvent se retrouver piégés dans le filtre.

Ainsi donc, dès que le filtre renferme un certain niveau de particules "non combustibles", l'assimilation du chargement total du filtre au chargement en particules combustibles devient erronée et peut conduire à des régénérations inappropriées, comme par exemple lorsque la quantité réelle de est insuffisante pour être traitée, d'où une multiplication des phases de régénération et par conséquent une surconsommation excessive du moteur.

L'objet de la présente invention consiste donc à déterminer la part du chargement d'un filtre en particules non combustibles (à la température de combustion des particules combustibles), part qui ne sera donc pas régénérer lors de la combustion des particules combustibles, et par déduction la part réelle du chargement en particules combustibles.

Selon la présente invention, le procédé de gestion du fonctionnement d'un filtre à particules pour moteur à combustion interne est caractérisé en ce que la régénération du filtre est déclenchée en fonction du chargement réel en particules combustibles, ledit chargement réel en suie étant déduit du chargement total du filtre auquel est soustrait le chargement en particules "non combustibles".

Selon une autre caractéristique du procédé objet de l'invention, le chargement en particules "non combustibles" est déduit du chargement total du filtre en fin de phase de régénération.

Par ailleurs, si le filtre à particules permet de supprimer efficacement les rejets de particules émises par un moteur, il présente toutefois l'inconvénient d'être un obstacle à l'écoulement des gaz et donc de générer une contre-pression à l'échappement qui perturbe le fonctionnement du moteur et dégrade ses performances. En effet, lors de la phase échappement, le piston doit fournir un plus grand effort mécanique pour évacuer les gaz d'échappement remplissant la chambre de combustion.

L'intensité de la contre-pression crée à l'échappement par le filtre à particules évolue dans le temps de façon cyclique en fonction du chargement en particules qui évolue lui aussi de façon cyclique. Le chargement croît en effet après chaque régénération jusqu'à atteindre une valeur maximale à partir de laquelle on déclenche une nouvelle phase de régénération. Il s'ensuit des dégradations cycliques des performances du moteur : couple ou puissance réduits, montée en régime plus lente, temps de réponse de la turbine de suralimentation plus long (lorsque le moteur est équipé d'un turbo), susceptibles d'être ressenties, de façon plus ou moins désagréablement, par le conducteur.

La présente invention vise donc également à pallier ce problème, en proposant une commande corrective des paramètres de contrôle moteur de façon à délivrer les mêmes performances quel que soit le niveau d'encrassement du filtre à particules.

Le procédé de commande selon l'invention concerne à cet effet un moteur à combustion interne dont la ligne d'échappement est munie d'un filtre à particules générant une contre-pression d'intensité variable en fonction du niveau de chargement dudit filtre.

Selon l'invention, le procédé de commande est caractérisé en ce que les paramètres de contrôle du couple délivré par le moteur sont corrigés en fonction du niveau de contre-pression générée par le filtre de façon à ce que le moteur délivre un couple sensiblement constant quel que soit ledit niveau de la contre-pression générée par le filtre, c'est-à-dire quel que soit le chargement du filtre.

Selon une autre caractéristique du procédé objet de l'invention, la quantité de carburant injectée et/ou le phasage de l'injection du carburant dans le cycle moteur et/ou la pression de suralimentation sont corrigés en fonction du niveau de la contre-pression générée par le filtre.

Selon une autre caractéristique du procédé objet de l'invention, le chargement en particules "non combustibles" est assimilé au chargement totale du filtre en fin de phase de régénération complète, ladite phase de régénération complète satisfaisant à des critères particuliers, notamment en terme de durée ou de températures atteintes.

Selon une autre caractéristique du procédé objet de l'invention, une phase de régénération complète est commandée périodiquement.

Selon une autre caractéristique du procédé objet de l'invention, le chargement en particules "non combustibles" est assimilé au chargement totale du filtre lors de conditions de fonctionnement prédéterminées du moteur.

Selon une autre caractéristique du procédé objet de l'invention, le chargement en particules combustibles est déterminé par la formule suivante :

$$c_2(t) = c(t) - c_1$$

où :

$c_2(t)$ chargement du filtre en particules combustibles en fonction du temps $t$,
$c(t)$ chargement total du filtre en fonction du temps $t$
$c_1$ est la dernière valeur du chargement en particules "non combustibles" acquise.

Selon une autre caractéristique du procédé objet de l'invention, le chargement en particules combustibles $(c_2)$ est déterminé par la formule suivante :

$$c2(t) = c(t)-c1(t)$$

où :

c2(t) chargement du filtre en particules combustibles en fonction du temps t,
c(t) chargement total du filtre en fonction du temps t
c1(t) est une fonction du temps déduite de la dernière valeur du chargement en particules "non combustibles" acquise, ladite fonction dépendant notamment du fonctionnement moteur.

Selon une autre caractéristique du procédé objet de l'invention, le chargement en particules "non combustibles" est comparé à une valeur de seuil prédéterminée de façon à déclencher un signal d'alerte en cas de dépassement dudit seuil.

Selon une autre caractéristique du procédé objet de l'invention, l'évolution du chargement en particules "non combustibles" est analysée pour contrôler le fonctionnement de moyens d'aide à la régénération tel qu'un apport d'additifs métalliques au carburant destinés à faire baisser la température de combustion des particules combustibles.

Selon une autre caractéristique du procédé objet de l'invention, le chargement total du filtre est obtenu à partir de l'analyse de la perte de charge aux bornes du filtres à particules.

Selon une autre caractéristique du procédé objet de l'invention, la correction des paramètres de contrôle du couple est déduite du point de fonctionnement du moteur et du niveau de chargement du filtre.

Selon une autre caractéristique du procédé objet de l'invention, la correction des paramètres de contrôle du couple est déduite de la perte de charge aux bornes du filtre et du débit des gaz d'échappement.

Selon une autre caractéristique du procédé objet de l'invention, la correction des paramètres de contrôle du couple est déduite de la perte de charge aux bornes du filtre, des quantités d'air et de carburant admises dans le moteur, ainsi que de la température et de la pression des gaz d'échappement mesurées en amont du filtre.

On comprendra mieux les buts, aspects et avantages de la présente invention, d'après la description présentée ci-après d'un mode de réalisation de l'invention, donné à titre d'exemple non limitatif, en se référant au dessin annexé, dans lequel :

- la figure 1 est une vue schématique d'un moteur à combustion interne équipé d'un filtre à particules, mettant en oeuvre le procédé selon l'invention.

- la figure 2 est un chronogramme précisant le procédé selon l'invention.

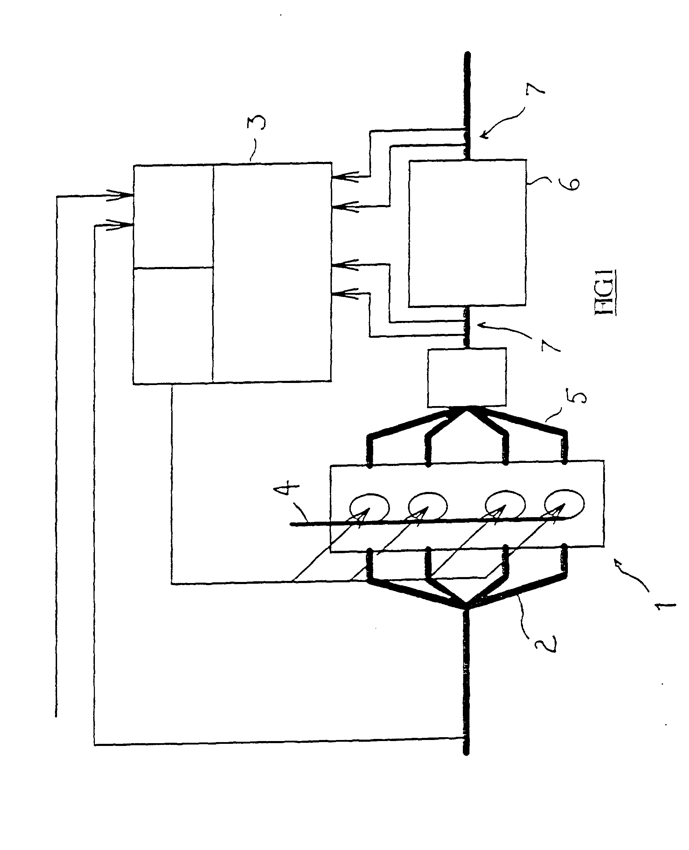

En se reportant sur la figure 1, on voit la structure générale d'un moteur à combustion interne référence 1, par exemple un moteur diesel pour véhicule automobile à quatre cylindres et injection directe de carburant, équipé d'un système d'échappement permettant la filtration des particules émises.

De façon classique, le moteur 1 est alimenté en air à travers un circuit d'admission 2. Des capteurs appropriés équipent ce circuit d'admission pour fournir à un calculateur de contrôle moteur des informations concernant la pression, la température ou encore le débit de l'air d'admission.

L'alimentation en carburant est assurée par des injecteurs électromagnétiques non figurés débouchant dans les chambres de combustion et pilotés par le calculateur de contrôle moteur 3 à partir d'un circuit de carburant sous pression 4 de type common rail encore appelé système d'alimentation haute pression à rampe commune.

En sortie du moteur 1, les gaz d'échappement évacués dans la ligne 5 traversent un filtre à particules 6. Différents capteurs 7, tels que des capteurs de pression et de température, placés en amont et en aval du filtre, fournissent au calculateur de contrôle moteur 3 des informations correspondantes.

Le calculateur d'injection 3 se compose essentiellement d'un microprocesseur ou unité centrale CPU, de mémoires vives RAM, de mémoires mortes ROM, de convertisseurs analogiques-numériques A/D, et différentes interfaces d'entrées et de sorties.

Le microprocesseur du calculateur d'injection 3 comporte des circuits électroniques et des logiciels appropriés pour traiter les signaux en provenance de différents capteurs adaptés, en déduire les états du moteur et générer les signaux de commande appropriés à destination notamment des différents actuateurs pilotés.

Le calculateur d'injection 3 commande donc à partir des informations délivrées par les différents capteurs et en particulier de la masse d'air admise et du régime moteur ainsi qu'à partir de formules et de calibrations mémorisées permettant le réglage optimal du moteur, le fonctionnement des injecteurs et notamment l'instant de début d'injection et la durée d'ouverture des injecteurs qui correspond à une quantité de carburant injectée et donc à une richesse du mélange remplissant les chambres de combustion.

Le calculateur 3 est également adapté pour assurer la gestion du fonctionnement du système d'échappement et notamment du filtre à particules 6. En particulier, et selon le procédé décrit ci-après, le calculateur 3 déduit à partir des informations fournies notamment par les capteurs 7, le niveau de remplissage du filtre à particules en particules "non combustibles" et en particules "combustibles" c'est-à-dire les suies, et selon notamment la valeur du chargement en suies, déclenche selon des stratégies adaptées une phase de régénération. Cette phase de régénération consiste essentiellement à augmenter la température des gaz d'échappement traversant le filtre 6 de façon à enflammer les particules piégées. Cette augmentation de la température est initiée par la mise en action de moyens d'aide à la régénération appropriés.

Différents moyens d'aide à la régénération peuvent être employés, on peut par exemple citer des moyens de chauffage électrique ou encore, comme dans l'exemple illustré, une élévation de la température des gaz d'échappements. Cette élévation de la température des gaz d'échappement est réalisée par simple commande des injecteurs par exemple en injectant en phase détente une quantité additionnelle de carburant et ce, pendant un nombre donné de cycles moteur.

Le calculateur 3 est également adapté pour mettre en oeuvre un contrôle du déclenchement et du déroulement de la régénération du filtre et un contrôle du fonctionnement et de l'intégrité du filtre intégrant notamment une alerte du conducteur en cas de chargement en particules "non combustibles" trop important.

Le procédé de gestion du fonctionnement du filtre à particules selon l'invention consiste donc à déterminer le chargement en particules "non combustibles" et le chargement en particules "combustibles" et piloter le fonctionnement du filtre à partir de ces différents chargements.

Pour la mise en oeuvre du procédé selon l'invention, il est tout d'abord nécessaire de déterminer le chargement total du filtre. Différentes méthodes sont possibles pour déterminer, à partir notamment des mesures faites à partir des capteurs 7, le chargement total du filtre 6. On peut, par exemple, citer celle décrite par la Demanderesse dans le document FR 278/251. Selon cette méthode, l'encrassement ou le chargement du filtre 6 en particules est donné par la formule :

$$(I) \qquad \Delta P = c.A + B,$$

avec

$\Delta P$ : pression différentielle amont-aval du filtre (mesurée à partir d'un capteur de pression différentielle) ;
c : chargement du filtre ;
A : débit volumique des gaz traversant le filtre ;
B : offset du capteur de pression différentielle.

Le débit volumique des gaz traversant le filtre A peut être donné par la formule :

$$(II) \qquad A = k.(Mair + Mc).N.T/P$$

avec

k : constante ;
Mair : masse d'air entrant dans le moteur ;
Mc : masse de carburant injectée ;
T : température des gaz en amont du filtre
P : pression des gaz en amont du filtre ;
N : régime moteur.

On voit donc qu'il suffit de deux points de mesure ($\Delta P1$, A1), ($\Delta P2$, A2), voire d'un seul si b est prédéterminé, pour obtenir c.

Ainsi, donc il est possible à tout moment de disposer de la valeur c du chargement du filtre. Cette valeur c se décompose, donc, en la somme de deux termes : c1 chargement en particules "non combustibles", et c2 chargement en particules combustibles :

$$c = c1 + c2.$$

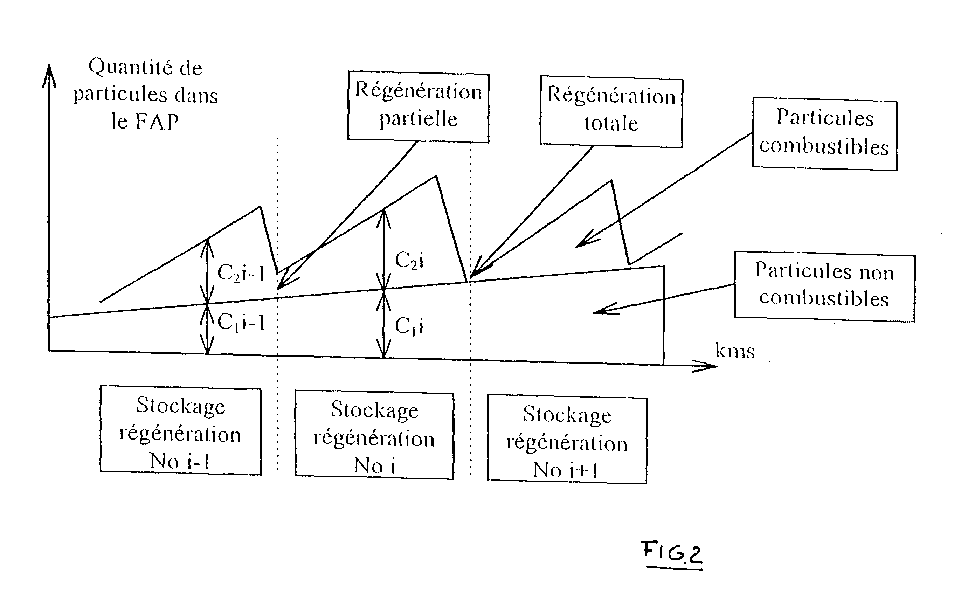

En se reportant sur la figure 2, on a précisé la mise en oeuvre du procédé selon l'invention et plus précisément la stratégie mise en oeuvre pour déterminer c1 et c2.

A partir du suivi des fonctionnements du moteur et du système d'échappement, on en déduit l'évolution mesurée du chargement du filtre 6. Ce chargement se compose comme on l'a vu ci-dessus d'un chargement en particules "non combustibles" et d'un chargement en particules combustibles.

Entre deux régénérations, on peut faire l'hypothèse que le chargement en particules "non combustibles" n'évolue que faiblement et que par conséquent l'évolution du chargement est alors essentiellement occasionnée par les particules combustibles émises par le moteur.

Ainsi, considérons qu'à la fin de la phase de stockage/régénération n°i, on connaît le niveau de chargement en particules "non combustibles" : $c1\_i$, on peut alors considérer que pendant la phase de stockage/régénération suivante n°i+1, on a :

$$c\_i+1(t) = c2\_i+1(t) + c1\_i+1(t)$$

et

$$c1\_i+1(t) = c1\_i$$

d'où

$$c\_i+1(t) = c2\_i+1(t) + c1\_i$$

d'où

$$c2\_i+1(t) = c\_i+1(t) - c1\_i$$

On a ainsi connaissance du chargement relativement exact en particules combustible du filtre et il est donc possible de commander la phase de régénération i+1 en parfaite connaissance de cause, à partir d'un critère tel qu'un seuil en masse de particules combustibles piégées.

En variante, on peut également faire évoluer c1_i+1 avec le temps (c1_i+1(t)), à partir de c1_i, suivant un modèle plus ou moins élaboré en fonction, par exemple, du suivi du fonctionnement moteur.

Lors de la régénération, au fur et à mesure de la combustion des particules combustibles, le chargement mesuré décroît pour atteindre à la fin de la phase de régénération une valeur minimale qui est constituée du chargement en particules "non combustibles" et d'un chargement résiduel en particules combustibles non brûlées.

Selon le procédé objet de la présente invention, on évalue en fonction d'un critère de qualité de la régénération, si le chargement résiduel en particules combustibles est nul ou non. Ce contrôle de la qualité de la régénération est permis par le contrôle du déclenchement et du déroulement de la régénération comme cela sera précisé ci-après.

Si le chargement résiduel en particules combustibles est nul, la régénération est alors dite complète et l'on a alors :

c_i+1(à l'instant de la fin de la phase de régénération i+1) = c1_i+1

La valeur du chargement en particules "non combustibles" est alors mémorisée et utilisée pour déterminer le chargement en particules combustibles lors de la phase de stockage suivante n°i+2 et ainsi de suite...

La valeur du chargement à la fin de la phase de régénération est déterminée comme étant la valeur du minimum local atteint par le chargement mesuré consécutivement au déclenchement de la phase de régénération.

Le critère de qualité de la régénération peut être plus ou moins élaboré. On peut ainsi, décider qu'après chaque régénération il n'y a plus de particules combustibles résiduelles et que par conséquent chaque régénération est complète. On peut également convenir qu'il n'y a plus de particules combustibles résiduelles, dès lors que la régénération s'est déroulée pendant une période temporelle excédant une valeur de seuil calibrée et/ou lorsque la température du filtre a excédé une valeur de seuil calibrée. Ces valeurs calibrées peuvent être constantes ou encore dépendre de différents paramètres et notamment le point de fonctionnement du moteur ou encore le niveau de chargement atteint lors de la mise en oeuvre des moyens d'aide à la régénération.

Si les régénérations selon les stratégies classiques de mise en oeuvre des moyens d'aides à la régénération ne permettent pas d'obtenir régulièrement des phases de régénération complètes où peut être déterminé le chargement en particules "non combustibles", il peut être prévu de déclencher volontairement des stratégies complètes.

Ainsi, par exemple lorsque la valeur du chargement en particules "non combustibles" n'a pas été acquise au delà d'une période prédéterminée ou à la suite d'un nombre prédéterminé de régénérations (non complètes), on augmente ponctuellement la durée ou l'intensité de mise en oeuvre des moyens d'aides à la régénération et/ou encore on augmente ponctuellement le seuil de déclenchement de la régénération de façon à s'assurer que la régénération suivante soit bien complète. En effet plus le chargement en particules combustible est important plus la régénération à de chance d'être complète.

Par ailleurs, on peut prévoir d'acquérir la valeur du chargement en particules "non combustibles", en dehors des seules phases de régénération volontaires du filtre et notamment lors de certains points de fonctionnement du moteur par exemple pleine charge, où la température des gaz d'échappement est telle que les particules combustible piégées sur le filtre sont toutes brûlées et où par conséquent le chargement mesuré ne peut être que le chargement en particules "non combustibles".

La valeur du chargement en particules "non combustibles" est en permanence contrôlée et sitôt que cette valeur dépasse une valeur de seuil on peut prévoir d'alerter le conducteur afin que ce dernier engage une opération d'entretien adaptée. En effet, plus le chargement en particules "non combustibles" augmente moins le filtre peut stocker de suies d'où d'importants dysfonctionnements dans la gestion du fonctionnement du filtre à particules.

Le suivi dans le temps du chargement en particules "non combustibles" peut également être suivi de façon à corriger d'éventuels dysfonctionnements du système de gestion du fonctionnement du filtre et notamment du système d'apport des additifs d'aide à la régénération. En effet, une augmentation anormalement élevée des dépôts en particules "non combustibles" pourrait être le signe d'un dérèglement du système d'additivation du carburant.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Ainsi, la valeur du chargement en particules non combustibles pourrait être déduit non pas de la mesure du chargement en fin de régénération mais directement de la consommation en additifs d'aide à la régénération, dans la mesure où ces additifs d'aide à la régénération sont responsables pour l'essentiel du chargement du filtre en particules "non combustibles".

Il suffit donc selon cette variante de réalisation de connaître la consommation totale en additif pour déterminer la quantité de particules non combustibles présente sur le filtre.

La concentration en additif dans le carburant étant prédéterminée, il peut être également possible pour déterminer la quantité de particules non combustibles présente sur le filtre, de suivre non pas la consommation en additif mais la consommation en carburant.

Le calculateur 3 est également adapté pour corriger le couple du moteur en fonction du chargement du filtre à particules et ce, de façon à fournir les mêmes performances du moteur quel que soit le niveau en chargement du filtre.

Cette correction est avantageusement intégrée aux stratégies de contrôle de la quantité de carburant injectée et/ou du phasage de cette quantité injectée dans le cycle.

De façon classique la quantité de carburant injectée (Qinj) est déterminée, à partir de cartographies adaptées (f), de la demande conducteur, c'est-à-dire de la position de la pédale d'accélérateur, et des conditions de fonctionnement du moteur (débit d'air, régime, température...). On a ainsi :

$$Qinj = f(\text{demande conducteur, conditions moteur})$$

Selon l'invention, la quantité de carburant injectée déterminée de façon "classique" est augmentée par un terme correctif corr destiné à compenser la perte de couple due au filtre à particules :

$$Qinj = f(\text{demande conducteur, conditions moteur}) + corr(\text{déchéance de couple lié au filtre})$$

Le terme correctif corr est dans l'exemple illustré un terme additif, il peut bien évidemment prendre une forme multiplicative.

Le terme correctif destiné à compenser la perte de couple liée au filtre est par exemple cartographié en fonction de la perte de charge aux bornes du filtre et du point de fonctionnement considéré.

En effet, la perte de couple due au filtre, peut être déduit en première approximation du travail nécessaire pour forcer les gaz d'échappement au travers du filtre. Ce travail est estimé comme le produit du débit des gaz par la perte de charge aux bornes du filtre :

$$\text{Travail} = \Delta P \times \text{Déch}$$

avec :

ΔP : différence entre la pression amont et aval prises aux bornes du filtre,
Déch : débit des gaz d'échappement.

Déch peut être donné par la formule suivante :

$$\text{Déch} = (\text{Dair} + \text{Dcarburant}) * R * \text{Téch}/\text{Péch}$$

avec :

Dair : débit massique d'air d'admission,
Dcarburant : débit massique de carburant,
R : constante massique des gaz d'échappement,
Téch : température des gaz d'échappement en amont du filtre,
Péch : pression des gaz d'échappement en amont du filtre.

On pourrait également utiliser le débit volumique des gaz d'échappement en divisant ce dernier par le régime de rotation du moteur.

On a ainsi, le terme correctif qui peut être cartographié en fonction de la ΔP, des débits volumiques et du régime ou bien en fonction de la ΔP, des débits massiques, de la température et de la pression des gaz d'échappement en amont du filtre.

De même puisque le chargement du filtre est déduit de la ΔP et du débit des gaz, le terme correctif peut être exprimé non pas en fonction de la ΔP mais du chargement.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant la définition des revendications jointes.

Ainsi la correction destinée à compenser la perte de couple peut affecter également le phasage de l'injection de carburant et/ou la pression de suralimentation dans le cas d'un moteur suralimenté et/ou le taux de recirculation des gaz d'échappement dans le cas ou le moteur est équipé d'un tel circuit de recirculation des gaz d'échappement (circuit EGR)..., c'est-à-dire tout paramètre agissant sur le couple du moteur.

## Revendications

1.    Procédé de gestion du fonctionnement d'un filtre à particules (6) pour moteur à combustion interne (1), **caractérisé en ce que** la régénération du filtre est déclenchée en fonction du chargement réel en particules combustibles (c2), ledit chargement réel en particules combustibles étant déduit du chargement total (c) du filtre auquel est soustrait le chargement en particules "non combustibles" (c1).

2.    Procédé de gestion selon la revendication 1, **caractérisé en ce que** le chargement en particules non combustibles (c1) est déduit du chargement totale du filtre (c) en fin de phase de régénération.

3.    Procédé de gestion selon la revendication 2, **caractérisé en ce que** le chargement en particules non combustibles (c1) est assimilé au chargement totale du filtre (c) en fin de phase de régénération complète, ladite phase de régénération complète satisfaisant à des critères particuliers, notamment en terme de durée ou de températures atteintes.

4.    Procédé de gestion selon la revendication 3, **caractérisé en ce qu'**une phase de régénération complète est commandée périodiquement.

5.    Procédé de gestion selon l'une quelconque des revendications 1 à 4, **caractérisé en ce que** le chargement en particules non combustibles (c1) est assimilé au chargement totale du filtre (c) lors de conditions de fonctionnement prédéterminées du moteur.

6.    Procédé de gestion selon l'une quelconque des revendications 1 à 5, **caractérisé en ce que** le chargement en particules combustibles (c2) est déterminé par la formule suivante :

$$c2(t) = c(t)-c1$$

où :

c2(t)   chargement du filtre en particules combustibles en fonction du temps t,
c(t)    chargement total du filtre en fonction du temps t
c1      est la dernière valeur du chargement en particules non combustibles acquise.

**7.** Procédé de gestion selon l'une quelconque des revendications 1 à 5, **caractérisé en ce que** le chargement en particules combustibles (c2) est déterminé par la formule suivante :

$$c2(t) = c(t)-c1(t)$$

où

c2(t)   chargement du filtre en particules combustibles en fonction du temps t,
c(t)    chargement total du filtre en fonction du temps t
c1(t)   est une fonction du temps déduite de la dernière valeur du chargement en particules non combustibles acquise, ladite fonction dépendant notamment du fonctionnement moteur.

**8.** Procédé de gestion selon l'une quelconque des revendications 1 à 7, **caractérisé en ce que** le chargement en particules non combustibles (c1) est comparé à une valeur de seuil prédéterminée de façon à déclencher un signal d'alerte en cas de dépassement dudit seuil.

**9.** Procédé de gestion selon l'une quelconque des revendications 1 à 8, **caractérisé en ce que** l'évolution du chargement en particules non combustibles (c1) est analysée pour contrôler le fonctionnement de moyens d'aide à la régénération tel qu'un apport d'additifs métalliques au carburant destinés à faire baisser la température de combustion des suies.

**10.** Procédé de gestion selon la revendication 1, **caractérisé en ce que** le chargement en particules non combustibles (c1) est déduit de la quantité consommée d'additifs destinés à faire baisser la température de combustion des suies.

**11.** Procédé de commande d'un moteur à combustion interne (1) dont la ligne d'échappement est munie d'un filtre à particules (6) géré conformément à l'une des revendications 1 à 10 et générant une contre-pression d'intensité variable en fonction du niveau de chargement dudit filtre (6), **caractérisé en ce que** les paramètres de contrôle du couple délivré par le moteur sont corrigés en fonction dudit niveau de contre-pression de façon à ce que le moteur (1) délivre un couple sensiblement constant quel que soit ledit niveau de la contre-pression générée par le filtre (6).

**12.** Procédé de commande d'un moteur à combustion interne (1) selon la revendication 11, **caractérisé en ce que** la quantité de carburant injectée et/ou le phasage de l'injection du carburant dans le cycle moteur et/ou la pression de suralimentation sont corrigés en fonction dudit niveau de contre-pression.

**13.** Procédé de commande d'un moteur à combustion interne (1) selon la revendication 11 ou 12, **caractérisé en ce que** ladite correction des paramètres de contrôle du couple est déduite du point de fonctionnement du moteur et du niveau de chargement du filtre.

**14.** Procédé de commande d'un moteur à combustion interne (1) selon revendication 11, 12 ou 13, **caractérisé en ce que** ladite correction des paramètres de contrôle du couple est déduite de la perte de charge aux bornes du filtre (6) et du débit des gaz d'échappement.

**15.** Procédé de commande d'un moteur à combustion interne (1) selon la revendication 11, 12 ou 13, **caractérisé en ce que** ladite correction des paramètres de contrôle du couple est déduite de la perte de charge aux bornes du filtre (6), des quantités d'air et de carburant admises dans le moteur, ainsi que de la température et de la pression des gaz d'échappement mesurées en amont du filtre.

**Patentansprüche**

1. Verfahren zur Steuerung der Betriebsweise eines Partikelfilters (6) für einen Verbrennungsmotor (1), **dadurch gekennzeichnet, dass** eine Regenerierung des Filters ausgelöst wird als Funktion der tatsächlichen Beladung mit brennbaren Partikeln,
wobei diese tatsächliche Beladung mit brennbaren Partikeln aus der gesamten Beladung (c) des Filters abgeleitet wird, von der die Beladung (c1) mit nicht brennbaren Partikeln abgezogen wird.

2. Verfahren zur Steuerung nach Anspruch 1, **dadurch gekennzeichnet, dass** die Beladung (c1) mit nicht brennbaren Partikeln von der gesamten Beladung (c) des Filters am Ende der Phase der Regenerierung abgezogen wird.

3. Verfahren zur Steuerung nach Anspruch 2, **dadurch gekennzeichnet, dass** die Beladung (c1) mit nicht brennbaren Partikeln an die gesamte Beladung (c) des Filters am Ende einer Phase der vollständigen Regenerierung angepasst wird, wobei die Phase der vollständigen Regenerierung besondere Kriterien erfüllt, insbesondere hinsichtlich der Zeitdauer oder der erreichten Temperaturen.

4. Verfahren zur Steuerung nach Anspruch 3, **dadurch gekennzeichnet, dass** eine Phase der vollständigen Regenerierung periodisch durchgeführt wird.

5. Verfahren zur Steuerung nach einem der Ansprüche 1 bis 4, **dadurch gekennzeichnet, dass** die Beladung (c1) mit nicht brennbaren Partikeln an die gesamte Beladung (c) des Filters während vorbestimmter Betriebszustände des Motors angepasst wird.

6. Verfahren zur Steuerung nach einem der Ansprüche 1 bis 5, **dadurch gekennzeichnet, dass** die Beladung (c2) mit brennbaren Partikeln gemäss der folgenden Formel bestimmt wird:

$$c2(t) = c(t) - c1$$

wobei:

c2(t) die Beladung des Filters mit brennbaren Partikeln als Funktion der Zeit t ist,
c(t) die gesamte Beladung des Filters als Funktion der Zeit t ist und
c1 der letzte erhaltene Wert der Beladung mit nicht brennbaren Partikeln ist.

7. Verfahren zur Steuerung nach einem der Ansprüche 1 bis 5, **dadurch gekennzeichnet, dass** die Beladung (c2) mit brennbaren Partikeln gemäss der folgenden Formel bestimmt wird:

$$c2(t) = c(t) - c1(t)$$

wobei:

c2(t) die Beladung des Filters mit brennbaren Partikeln als Funktion der Zeit t ist,
c(t) die gesamte Beladung des Filters als Funktion der Zeit t ist und
c1(t) eine Funktion der Zeit ist, die abgeleitet ist aus dem letzten erhaltenen Wert der Beladung mit nicht brennbaren Partikeln, wobei diese Funktion vor allem vom der Betriebsweise des Motors abhängt.

8. Verfahren zur Steuerung nach einem der Ansprüche 1 bis 7, **dadurch gekennzeichnet, dass** die Beladung (c1) mit nicht brennbaren Partikeln mit einem vorgegebenem Schwellwert verglichen wird, sodass ein Warnsignal im Fall des Überschreitens des Schwellwertes erzeugt wird.

9. Verfahren zur Steuerung nach einem der Ansprüche 1 bis 8, **dadurch gekennzeichnet, dass** die Entwicklung der Beladung (c1) mit nicht brennbaren Partikeln analysiert wird zur Kontrolle der Wirkungsweise von Hilfsmitteln zur Unterstützung der Regenerierung , wie die Zugabe von metallischen Additiven zum Kraftstoff im Hinblick auf eine Absenkung der Temperatur der Verbrennung von Russ.

10. Verfahren zur Steuerung nach Anspruch 1, **dadurch Gekennzeichnet, dass** die Beladung (c1) mit nicht brennbaren Partikeln aus der verbrauchten Menge an Additiven für die Absenkung der Temperatur der Verbrennung von Russ abgeleitet wird.

11. Verfahren zur Steuerung eines Verbrennungsmotors (1) dessen Abgasanlage mit einem Partikelfilter (6) versehen ist, der nach einem der Ansprüche 1 bis 10 gesteuert wird und der einen Gegendruck variabler Intensität als Funktion der Beladung des Filters (6) erzeugt, **dadurch gekennzeichnet, dass** die Parameter für die Kontrolle des vom Motor abgegebenen Drehmoments korrigiert werden als Funktion der Höhe des Gegendrucks, derart, dass der Motor (1) ein im wesentlichen konstantes Drehmoment abgibt, das unabhängig ist von der Höhe des vom Filter (6) erzeugten Gegendrucks.

12. Verfahren zur Steuerung eines Verbrennungsmotors nach Anspruch 11, **dadurch gekennzeichnet, dass** die Menge an eingespritztem Kraftstoff und /oder der zeitliche Ablauf der Einspritzung des Kraftstoffs während des Motorzyklus und/oder der Aufladedruck als Funktion der Höhe des Gegendrucks korrigiert werden.

13. Verfahren zur Steuerung eines Verbrennungsmotors (1) nach Anspruch 11 oder 12, **dadurch gekennzeichnet, dass** die Korrektur der Parameter für die Kontrolle des Drehmoments abgeleitet wird aus dem dem Betriebspunkt des Motors und aus dem Grad der Beladung des Filters.

14. Verfahren zur Steuerung eines Verbrennungsmotors (1) nach Anspruch 11, 12 oder 13, **dadurch gekennzeichnet, dass** die Korrektur der Parameter für die Kontrolle des Drehmoments abgeleitet wird aus der Verminderung der Last an den Anaschlüssen des Filters (6) und dem Abgasdurchsatz.

15. Verfahren zur Steuerung eines Verbrennungsmotors Nach Anspruch 11, 12 oder 13, **dadurch Gekennzeichnet, dass** die Korrektur der Parameter für die Kontrolle des Drehmoments abgeleitet wird aus der Verminderung der Last an den Anschlüssen des Filters (6), den Mengen an Luft und Kraftstoff, die dem Motor zugeführt werden, sowie aus der Temperatur und dem Druck der Abgase, die stromaufwärts des Filters gemessen werden.

**Claims**

1. A process for management of the operation of a particulate filter (6) for an internals combustion engine (1) **characterised in that** regeneration of the filter is launched in dependence on the real loading of combustible particles (c2), said real loading of combustible particles being deduced from the total loading (c) of the filter from which the loading of non-combustible particles (c1) is subtracted.

2. A management process according to claim 1 **characterised in that** the loading of non-combustible particles (c1) is deduced from the total loading of the filter (c) at the end of a regeneration phase.

3. A management process according to claim 2 **characterised in that** the loading of non-combustible particles (c1) is assimilated to the total loading of the filter (c) at the end of a complete regeneration phase, said complete regeneration phase satisfying particular criteria, in particular in terms of duration or temperatures attained.

4. A management process according to claim 3 **characterised in that** a complete regeneration phase is implemented periodically.

5. A management process according to any one of claims 1 to 4 **characterised in that** the loading of non-combustible particles (c1) is assimilated to the total loading of the filter (c) under predetermined operating conditions of the engine.

6. A management process according to any one of claims 1 to 5 **characterised in that** the loading of combustible particles (c2) is determined by the following formula:

$$c2(t) = c(t) - c1$$

wherein:

c2(t) denotes the loading of the filter in respect of combustible particles in dependence on time t,
c(t) denotes the total loading of the filter in dependence on the time t, and
c1 is the last value of the loading of non-combustible particles acquired.

**7.** A management process according to any one of claims 1 to 5 **characterised in that** the loading of combustible particles (c2) is determined by the following formula:

$$c2(t) = c(t) - c1(t)$$

wherein:

c2(t) denotes the loading of the filter in respect of combustible particles in dependence on time t,
c(t) denotes the total loading of the filter in dependence on the time t, and
c1(t) is a function of the time deduced from the last value of the loading of non-combustible particles acquired, said function depending in particular on engine operation.

**8.** A management process according to any one of claims 1 to 7 **characterised in that** the loading of non-combustible particles (c1) is compared to a predetermined threshold value in such a way as to launch a warning signal in the event of said threshold being exceeded.

**9.** A management process according to any one of claims 1 to 8 **characterised in that** the variation in the loading of non-combustible particles (c1) is analysed to control the operation of means for aiding with regeneration such as a supply of metallic additives to the fuel which are intended to reduce the combustion temperature of the soots.

**10.** A management process according to claim 1 **characterised in that** the loading of non-combustible particles (c1) is deduced from the consumed amount of additives which are intended to reduce the combustion temperature of the soots.

**11.** A process for controlling an internal combustion engine (1) whose exhaust line is provided with a particulate filter (6) managed in accordance with one of claims 1 to 10 and generating a back-pressure of an intensity which is variable in dependence on the level of loading of said filter (6), **characterised in that** the management parameters for the torque delivered by the engine are corrected in dependence on the level of back-pressure in such a way that the engine (1) delivers a substantially constant torque irrespective of said level of the back-pressure generated by the filter (6).

**12.** A process for controlling an internal combustion engine (1) according to claim 11 **characterised in that** the amount of fuel injected and/or the phasing of the injection of fuel in the engine cycle and/or the boost pressure are corrected in dependence on the level of back-pressure.

**13.** A process for controlling an internal combustion engine (1) according to claim 11 or claim 12 **characterised in that** said correction of the management parameters for the torque is deduced from the operating point of the engine and the level of loading of the filter.

**14.** A process for controlling an internal combustion engine (1) according to claim 11, claim 12, or claim 13 **characterised in that** said correction of the management parameters for the torque is deduced from the pressure drop at the connections of the filter (6) and the flow rate of the exhaust gases.

**15.** A process for controlling an internal combustion engine (1) according to claim 11, claim 12, or claim 13 **characterised in that** said correction of the management parameters for the torque is deduced from the pressure drop at the connections of the filter (6), the amounts of air and fuel passed into the engine, and the temperature and the pressure of the exhaust gases which are measured upstream of the filter.

FIG1

FIG.2